# EUROPÄISCHE PATENTANMELDUNG

(11) **EP 0 834 375 A1**
(43) Veröffentlichungstag der Anmeldung: **08.04.1998**
(21) Anmeldenummer: 97113992.8
(22) Anmeldetag: 13.08.1997
(51) Int. Cl.: B23K 1/008, H05K 3/34

(54) **Reflowlötanlage**

(30) Priorität: 02.10.1996 DE 29617213 U
(71) Anmelder: SMT Maschinengesellschaft mbH, D-97877 Wertheim (DE)
(72) Erfinder: Ulzhöfer, Hans-Günther, 97877 Wertheim (DE)
(74) Vertreter: Pellmann, Hans-Bernd, Dipl.-Ing.

(57) **Zusammenfassung**

Reflowlötanlage mit einer Vorheizzone, einer Lötzone und einer Kühlzone, durch die das Lötgut gefördert wird, wobei in der Vorheizzone Vorheizeinrichtungen vorgesehen sind, um das Lötgut zu erwärmen und in der Lötzone das Lötgut mittels weiterer Heizeinrichtungen zumindest auf die Löttemperatur erwärmbar ist, wobei das Lötgut in der Kühlzone vor Ausgabe abkühlt. In der Lötzone sind in Förderrichtung nacheinander mindestens zwei Heizeinrichtungen vorgesehen, wobei die erste Heizeinrichtung, die in Förderrichtung nach der Vorheizzone angeordnet ist, eine höhere Temperatur erzeugt als die in Förderrichtung nachfolgende zweite Heizeinrichtung.

## Beschreibung

Die Erfindung bezieht sich auf eine Reflowlötanlage gemäß dem Oberbegriff des Anspruchs 1.

Es sind unterschiedliche Arten von Reflowlötanlagen bekannt. Während früher häufig Reflowlötanlagen mit Strahlungsheizung eingesetzt wurden, werden heute in erster Linie Reflowlötanlagen mit einer Konvektionsheizung eingesetzt. Allen Arten von Reflowlötanlagen ist jedoch gemeinsam, daß sie über eine Vorheizzone, eine Lötzone und eine Abkühlzone verfügen.

In der Vorheizzone wird das mit der Lotpaste versehene Lötgut vorgeheizt und üblicherweise allmählich auf eine Temperatur von ca. 160°C erhitzt. Es gibt Anlagen, die über eine Vorheizzone vefügen, bei der das Lötgut lediglich von einer Seite erhitzt wird und auch Anlagen, bei denen das Lötgut von beiden Seiten erhitzt wird.

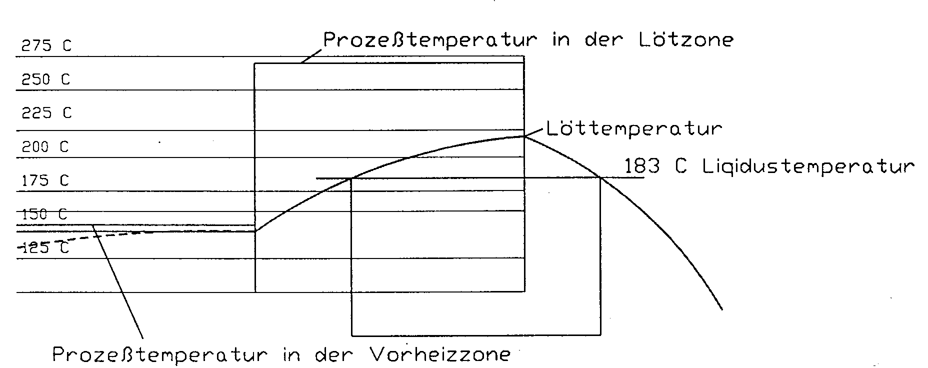

In der Lötzone erfolgt eine weitere Erwärmung des Lötgutes auf eine Temperatur, die über der Liquidustemperatur der verwendeten Lötpaste liegt, um den eigentlichen Lötvorgang durchzuführen. Um Lötstellen hoher Qualität zu erreichen, ist es erforderlich, die Temperatur der Lötstelle maximal 60s über der Liquidustemperatur zu halten. Sind auf einer zu verlötenden Platine auch größere Bauelemente angeordnet, so muß die Lötzone mit einer Temperatur betrieben werden, die deutlich über der Löttemperatur liegt, um innerhalb dieser Zeit zu gewährleisten, daß auch die größeren Bauelemente bzw. deren Lötflächen die Löttemperatur erreichen. Es wird daher in der Lötzone mit Prozeßtemperaturen von bis zu 300°C gearbeitet.

Der Temperaturgradient, mit dem sich ein Bauteil erwärmt, hängt selbstverständlich nicht nur von dessen Größe oder Masse, sondern auch von weiteren Faktoren ab. Hinsichtlich der übertragenen Strahlungsenergie spielt die Farbe der Bauteile eine große Rolle, hinsichtlich der Energieübertragung durch Konvektion ist die Geometrie der Bauteile sowie deren Masse und Wärmeleitfähigkeit von großer Bedeutung.

Dies führt dazu, daß bei einer zu verlötenden Baugruppe, die mit sehr unterschiedlichen Bauteilen bestückt ist, die Temperaturgradienten der verschiedenen Bauteile sehr unterschiedlich ausfallen. Sind auf der Baugruppe Bauteile, die sich nur sehr langsam erwärmen, mit Bauteilen kombiniert, die sich schnell erwärmen, wird es schwierig, herkömmliche Lötanlagen so zu steuern, daß einerseits alle Bauteile ausreichend schnell und gleichmäßig die Löttemperatur erreichen und andererseits kein Bauteil überhitzt wird. Selbstverständlich ist dieses Problem besonders bei temperaturempfindlichen Bauteilen relevant.

Bislang wurde versucht, diese Probleme durch die Temperaturregelung der Vorheizzonen und über die Verweilzeit der Baugruppe in der jeweiligen Zone oder durch zusätzliche Strahler in der Lötzone in den Griff zu bekommen. Dies ist jedoch nicht vollständig gelungen.

Es wird daher versucht, durch die Entwicklung neuer Reflowlötverfahren und Reflowlötanlagen zur Realisierung dieser Verfahren, diese Problematik in den Griff zu bekommen.

Aufgabe der Erfindung ist es, eine Reflowlötanlage zu schaffen, die gewährleistet, daß innerhalb einer vorgegebenen Zeitspanne unterschiedlichste Bauteile einer zu verlötenden Baugruppe die gewünschte Löttemperatur erreichen, ohne daß ein Überhitzen von Bauteilen und Leiterplatte auftritt.

Die Aufgabe wird durch die Merkmale des Anspruchs 1 gelöst. Geschaffen wird eine Reflowlötanlage mit einer Vorheizzone, einer Lötzone und einer Kühlzone, durch die das Lötgut gefördert wird, wobei in der Vorheizzone Vorheizeinrichtungen vorgesehen sind, um das Lötgut auf eine Vorheiztemperatur unterhalb der Löttemperatur zu bringen.

Der eigentliche Lötvorgang findet in der Lötzone statt, in der das Lötgut mittels weiterer Heizeinrichtungen deutlich auf die Löttemperatur erwärmt wird, um ein vollständiges Aufschmelzen der Lötpaste und ein Verlöten der Lötflächen zu bewirken. Hierzu sind in der Lötzone in Förderrichtung nacheinander mindestens zwei von oben wirkende und mindestens zwei von unten wirkende Heizeinrichtungen vorgesehen, wobei die Heizeinrichtungen, die in Förderrichtung nach der Vorheizzone angeordnet sind (1. Stufe), eine höhere Temperatur erzeugen, als die in Förderrichtung nachfolgenden Heizeinrichtungen (2. Stufe). Durch diese neuartige Konstruktion und Einstellung der Temperaturen in der Lötzone ergibt sich eine ausgesprochen gleichmäßige Erwärmung des gesamten Lötgutes. Dies wird durch die in der Figurenbeschreibung detailliert beschriebenen Temperaturprofile besonders anschaulich.

Vor Ausgabe des Lötgutes aus der Lötanlage wird in der Kühlzone eine Abkühlung des Lötgutes ermöglicht. Eine Abkühlung kann auf natürlichem Wege durch Wärmeabgabe des Lötgutes an die Umgebung geschehen oder durch eine aktive Kühlung, indem beispielsweise ein Medium auf das Lötgut geblasen wird und somit eine erzwungene Konvektion erfolgt. Das Medium kann durch eine Kühleinrichtung unter die Umgebungstemperatur gekühlt werden.

Es wurde herausgefunden, daß die Temperatur einer Lötstelle maximal ca. 60 sek. über dem Liquiduspunkt der Lötpaste liegen soll. Andernfalls können Bauteile und Leiterplatte Schaden erleiden. Es ist daher nicht möglich, in der Lötzone mit einer Temperatur zu arbeiten, die nur geringfügig über der Liquidustemperatur liegt, um so ein Überhitzen von kleinen Bauteilen bzw. Bauteilen, die schnell Wärme aufnehmen, zu vermeiden. Da bei dieser Vorgehensweise das Lötgut wesentlich länger als 60 sek. in der Lötzone bleiben müßte, um auch bei den schlecht Wärme aufnehmenden Bauteilen eine Verlötung der Lötstellen zu gewährleisten.

Des weiteren ist es nicht möglich, das Lötgut in der Vorheizzone auf eine Temperatur nahe der Liquidustemperatur zu erwärmen, da die Aktivatoren in den Lotpasten ihre Funktion verlieren und es zu einer unerwünschten Oxidation der Lotpaste kommt, wodurch die Qualität der erzielten Lötung stark beeinträchtigt wird. Die Temperatur in der Vorheizzone sollte daher ca. 150°C nicht übersteigen. Aufgrund der Oxidationsproblematik sollte der Temperaturanstieg ausgehend von der Temperatur am Ende der Vorheizzone zur Löttemperatur daher schnell, jedoch mit max. 4 Kelvin/Sek. erfolgen. Angestrebt werden für diese Phase ca. 40 sek.

Aus den angestellten Überlegungen wird klar, daß in der Lötzone mit relativ hohen Temperaturen gearbeitet werden muß, um einen schnellen Temperaturanstieg und eine kurze Verweilzeit von weniger als 60 sek. bei einer Temperatur oberhalb der Liquidustemperatur zu gewährleisten.

Gemäß der Erfindung kann dies realisiert werden, indem das Lötgut in der Lötzone zunächst mit einer relativ hohen Temperatur beaufschlagt wird, so daß eine schnelle Erwärmung stattfindet und das Lötgut, bevor es zu einem Überhitzen einzelner Bauteile kommt, in einen Bereich weitergefördert wird, in dem dieses mit einer deutlich geringeren Temperatur beaufschlagt wird, wodurch einerseits das Überhitzen von Bauteilen, die schnell Wärme aufnehmen, verhindert wird und andererseits überraschenderweise dennoch die Temperatur von Bauteilen, die nur langsam und träge Wärme aufnehmen, relativ stetig weiter erhöht wird. Anhand der Temperaturkurven, die in der Figurenbeschreibung erläutert werden, kann dies gut nachvollzogen werden.

Es haben sich Konvektionsheizeinrichtungen bewährt, wobei die Heizeinrichtungen auch Strahlungsenergie abgeben können. Auch eine Kombinationsheizeinrichtung, bestehend aus Strahlungs- und Konvektionsheizvorrichtungen, ist geeignet.

Die für ein gutes Lötergebnis optimalen Temperaturen hängen von der Lötaufgabe, also der Beschaffenheit des Lötgutes und der verwendeten Lotpaste ab. In den meisten Fällen sollten die der Vorheizzone nachgeordneten Heizeinrichtungen im Bereich des Lötgutes eine Temperatur von mehr als 205°C erzeugen. Für die Lötung von Elektronikbaugruppen bewährt sich in zahlreichen Fällen eine Prozeßtemperatur in der ersten Stufe von 240°C bis 280°C.

Die nachfolgenden Heizeinrichtungen sollten im Bereich des Lötgutes eine wesentlich geringere Temperatur erzeugen, die allerdings im Normalfall dennoch über 200°C liegen sollte.

Für die Lötung von Elektronikbaugruppen hat sich in zahlreichen Fällen eine Prozeßtemperatur in der 2. Stufe von ca. 200°C bis 210°C bewährt.

Die verschiedenen Zonen der Lötanlage können in einer geraden oder gekrümmten Linie angeordnet sein oder über Eck vorgesehen sein. Auch wenn die Fördereinrichtung am einfachsten zu realisieren ist, wenn die Zonen in einer geraden Linie angeordnet sind, kann eine abweichende Anordnung besonders bei großen Anlagen vorteilhaft sein, da sich auf diese Weise ein kompakterer Aufbau realisieren läßt.

Besonders vorteilhaft hinsichtlich der benötigten Stellfläche ist ein Aufbau, bei dem die Förderrichtung zumindest über Teilstrecken im wesentlichen vertikal ist und Teilbereiche der Lötanlage somit übereinander angeordnet sind.

Figur 1 zeigt in einer Prinzipskizze die erfindungsgemäße Lötanlage.

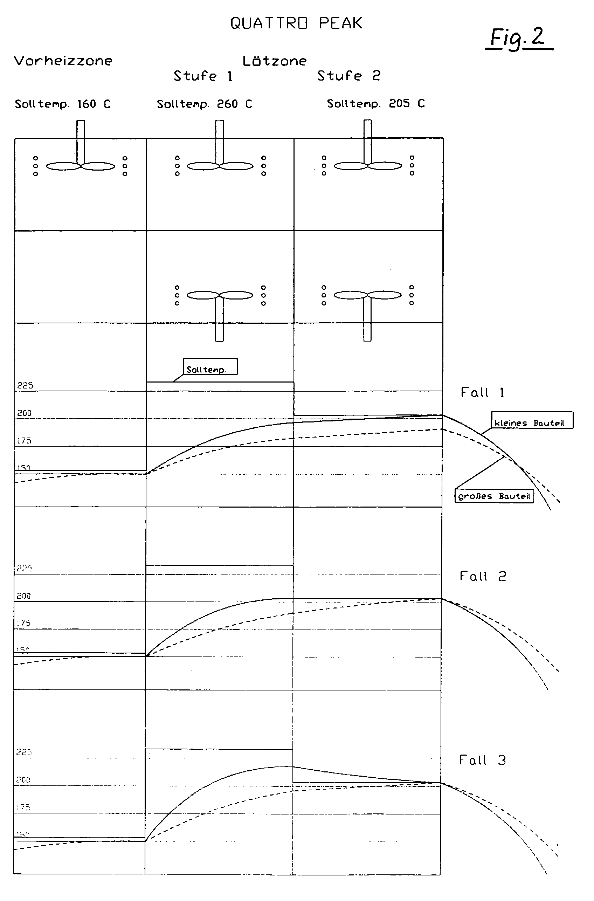

Figur 2 zeigt drei Temperaturverläufe von unterschiedlichen Baugruppen, die mit einem Ausführungsbeispiel der erfindungsgemäßen Lötanlage gelötet wurden.

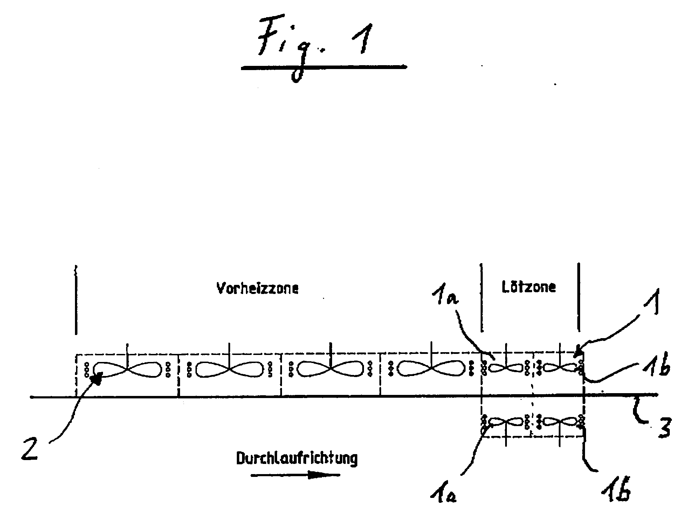

Aus Figur 1 ist gut das Konstruktionsprinzip der erfindungsgemäßen Lötanlage zu ersehen. In der Lötzone sind vier Heizeinrichtungen 1 vorgesehen. Bei diesen Heizeinrichtungen 1 handelt es sich um Konvektionsheizeinrichtungen, bei denen die Wärme mittels eines Gebläses auf das Lötgut aufgebracht wird. In der Vorheizzone sind ebenfalls vier Vorheizeinrichtungen 2 vorgesehen, bei denen es sich ebenfalls um Konvektionsheizeinrichtungen handelt. Bei dem dargestellten Ausführungsbeispiel sind die Vorheizeinrichtungen 2 ausschließlich über der Transportebene 3 angeordnet, so daß das Lötgut in der Vorheizzone ausschließlich von oben erwärmt wird.

Bei anderen, nicht dargestellten Ausführungsbeispielen erfolgt eine Erwärmung des Lötgutes in der Vorheizzone von oben und unten mittels Heizeinrichtungen, die auf beiden Seiten der Transportebene vorgesehen sind.

Das Lötgut wird mittels einer Fördereinrichtung auf der Transportebene 3 in Durchlaufrichtung gefördert. Die Vorheizeinrichtungen 2 sind so eingestellt, daß die von diesen erzeugte Temperatur kontinuierlich ansteigt. Die Temperatur am Ende der Vorheizzone beträgt bei diesem Ausführungsbeispiel 160°C.

Der Vorheizzone folgt die Lötzone, in der die eigentliche Lötung erfolgt, indem die Liquidustemperatur der verwendeten Lotpaste erreicht wird. Um die Lotpaste ausreichend schnell auf die Liquidustemperatur zu bringen, ist am Eingang der Lötzone sowohl oberhalb als auch unterhalb der Transportebene eine erste Heizeinrichtung 1a vorgesehen, die eine relativ hohe Temperatur erzeugt. Bei dem gezeigten Ausführungsbeispiel wurde diese Temperatur auf 260°C eingestellt.

Um ein Überhitzen von Bauteilen, die relativ schnell Wärme aufnehmen, zu vermeiden, ist die Lötzone gewissermaßen zweigeteilt und den ersten Heizeinrichtungen 1a folgen zweite Heizeinrichtungen 1b, die ebenfalls auf beiden Seiten der Transportebene angeordnet sind. Diese Heizeinrichtungen 1b sind auf eine wesentlich geringere Temperatur eingestellt. Bei dem konkreten Ausführungsbespiel wurde eine Temperatur von 205°C gewählt.

Nach Verlassen der Lötzone durchläuft das Lötgut eine Kühlzone, in der das Lötgut sich abkühlen kann. In dieser Kühlzone kann eine Kühleinrichtung vorgesehen sein, um das Lötgut schnell abzukühlen. In Figur 1 ist die Kühlzone nicht dargestellt.

Mit der in Figur 1 dargestellten Lötanlage wurden mit den angegebenen Temperaturen drei unterschiedlich bestückte elektronische Baugruppen gelötet. Da üblicherweise kleinere Bauteile sehr schnell Wärme aufnehmen und größere Bauteile sehr langsam, wurde ein kleines und ein großes Bauteil mit einem Temperatursensor bestückt und die gemessene Temperatur aufgezeichnet.

Die Liquidustemperatur des verwendeten Lotes lag bei ca. 180°C. Wie zu erwarten und auch erwünscht, erfahren die Bauteile im ersten Bereich der Lötzone aufgrund der hohen Prozeßtemperatur von 270°C der ersten Heizeinrichtungen 1a einen schnellen Temperaturanstieg, der bewirkt, daß die Lötflächen und die darauf befindliche Lötpaste schnell die Liquidustemperatur erreichen. Am Übergang vom ersten Bereich der Lötzone in den zweiten Bereich, in dem eine Erwärmung mittels der zweiten Heizeinrichtungen 1b erfolgt, beträgt die Temperatur des kleinen Bauteils im Fall 1 bereits ca. 200°C und es bestünde bei weiterer Beaufschlagung des Bauteiles mit 270°C die Gefahr, daß das Bauteil überhitzt. Eine solche Überhitzung ist jedoch im vorliegenden Fall ausgeschlossen, da die zweiten Heizeinrichtungen nur noch mit 205°C betrieben werden.

Der Temperaturanstieg im zweiten Bereich ist erwartungsgemäß geringer. Das kleine Bauteil, dessen Temperatur bereits sehr nahe der Temperatur der zweiten Heizeinrichtung ist, erwärmt sich nur noch geringfügig. Aufgrund des größeren Abstandes der Temperatur des größeren Bauteiles zur Temperatur der zweiten Heizeinrichtung erwärmt sich dieses im zweiten Bereich etwa genauso schnell wie das kleinere Bauteil, so daß die Temperaturkurven in diesem Bereich fast parallel sind.

Nach Verlassen der Lötzone kühlen die Bauteile ab, wobei das kleinere Bauteil selbstverständlich wesentlich schneller abkühlt als das große Bauteil.

Der Fall 2 zeigt den Lötvorgang einer anders bestückten Baugruppe. Auch in diesem Fall wurde die Temperatur an einem kleinen und einem großen Bauteil gemesen. Das kleine Bauteil erreicht am Ende des ersten Bereiches bereits die Temperatur der zweiten Heizeinrichtungen 1b von 205°C und hält natürlich diese Temperatur im zweiten Bereich.

Das große Bauteil hat bei Verlassen des ersten Bereiches erst eine Temperatur von ca. 190°C erreicht und erwärmt sich daher im zweiten Bereich weiter, bis es ebenfalls am Ende des zweiten Bereiches die Temperatur der zweiten Heizeinrichtungen 1b erreicht hat. Selbstverständlich wäre dies zum Erzielen einer fehlerfreien Lötung nicht erforderlich, da bereits bei niedrigeren Temperaturen eine fehlerfreie Lötung gewährleistet ist. Der Temperaturanstieg des großen Bauteils im zweiten Bereich entspricht fast dem im ersten Bereich, obwohl die Temperatur der zweiten Heizeinrichtungen 1b wesentlich geringer ist, da das große Bauteil eine große Trägheit aufweist.

Fall 3 zeigt ein weiteres interessantes Beispiel. Bei dieser Baugruppe hat das kleine Bauteil am Ende des ersten Bereiches eine Temperatur erreicht, die über der Temperatur der zweiten Heizeinrichtungen 1b im zweiten Bereich liegt. Dies führt dazu, daß das kleine Baute im zweiten Bereich auf die Temperatur der zweiten Heizeinrichtungen 1b abkühlt und in diesem Bereich Wärme an die größeren Bauteile abgibt, die die Temperatur der zweiten Heizeinrichtungen noch nicht erreicht haben. Dieser Effekt führt zu einer weiteren Vergleichmäßigung der Bauteiltemperaturen. Besonders bei Baugruppen, die eine Vielzahl solcher Bauteile aufweisen, ist dieser Effekt nicht zu vernachlässigen.

Die Bauteile dieser Baugruppe verlassen - wie im Fall 2 - die Lötzone mit etwa der gleichen Temperatur, die der Temperatur der zweiten Heizeinrichtung 1b entspricht.

Es wurden mit derselben Einstellung der Heizeinrichtungen 1 drei unterschiedliche Baugruppen gelötet und es hat sich herausgestellt, daß es in keinem Fall zu einem Überhitzen von kleinen Bauteilen kam, die schnell Wärme aufnehmen. Die höchste gemessene Bauteiltemperatur betrug ca. 220°C und wurde nur für ca. 10 sek. erreicht. Eine solche Temperaturbelastung ist absolut unkritisch.

In allen Fällen war die Temperaturdifferenz zwischen großen und kleinen Bauteilen gering. Am Ende der Lötzone wiesen die Bauteile in zwei Fällen identische Temperaturen auf. Im dritten Fall betrug die Temperaturdiffernz nur ca. 15°C. Es kann somit festgestellt werden, daß das Ziel der Erfindung, eine gleichmäßige homogene Erwärmung des Lötgutes zu gewährleisten, voll erreicht wurde.

Reflowlötanlage mit einer Vorheizzone, einer Lötzone und einer Kühlzone, durch die das Lötgut gefördert wird, wobei in der Vorheizzone Vorheizeinrichtungen vorgesehen sind, um das Lötgut zu erwärmen und in der Lötzone das Lötgut mittels weiterer Heizeinrichtungen zumindest auf die Löttemperatur erwärmbar ist, wobei das Lötgut in der Kühlzone vor Ausgabe abkühlt. In der Lötzone sind in Förderrichtung nacheinander mindestens zwei Heizeinrichtungen vorgesehen, wobei die erste Heizeinrichtung, die in Förderrichtung nach der Vorheizzone angeordnet ist, eine höhere Temperatur erzeugt als die in Förderrichtung nachfolgende zweite Heizeinrichtung.

## Patentansprüche

1. Reflowlötanlage mit einer Vorheizzone, einer Lötzone und einer Kühlzone, durch die das Lötgut gefördert wird, wobei in der Vorheizzone Vorheizeinrichtungen (2) vorgesehen sind, um das Lötgut zu erwärmen und in der Lötzone das Lötgut mittels weiterer Heizeinrichtungen (1) zumindest auf die Löttemperatur erwärmbar ist, wobei das Lötgut in der Kühlzone vor Ausgabe abkühlt, **dadurch gekennzeichnet,** daß in der Lötzone in Förderrichtung nacheinander mindestens zwei Heizeinrichtungen (1) vorgesehen sind, wobei die erste Herzeinrichtung (1a), die in Förderrichtung nach der Vorheizzone angeordnet ist, eine höhere Temperatur erzeugt als die in Förderrichtung nachfolgende zweite Heizeinrichtung (1b).

2. Reflowlötanlage nach Anspruch 1, **dadurch gekennzeichnet,** daß zwei von oben wirkende und mindestens zwei von unten wirkende Heizeinrichtungen (1) vorgesehen sind.

3. Reflowlötanlage nach Anspruch 1, **dadurch gekennzeichnet**, daß als Heizeinrichtungen (1) Konvektionsheizeinrichtungen vorgesehen sind.

4. Reflowlötanlage nach einem der Ansprüche 1 bis 3, **dadurch gekennzeichnet,** daß die Heizeinrichtungen (1) Strahlungsenergie abgeben.

5. Reflowlötanlage nach einem der Ansprüche 1 bis 4, **dadurch gekennzeichnet,** daß die der Vorheizzone nachgeordneten ersten Heizeinrichtungen (1a) im Bereich des Lötgutes eine Temperatur von mehr als 210°C erzeugen.

6. Reflowlötanlage nach Anspruch 5, **dadurch gekennzeichnet,** das die Temperatur 270°C bis 300°C beträgt.

7. Reflowlötanlage nach einem der Ansprüche 1 bis 6, **dadurch gekennzeichnet,** daß die nachfolgenden zweiten Heizeinrichtungen (1b) im Bereich des Lötgutes eine Temperatur von mehr als 190°C erzeugen.

8. Reflowlötanlage nach Anspruch 7, **dadurch gekennzeichnet,** daß die Temperatur ca. 230°C beträgt.

9. Reflowlötanlage nach einem der Ansprüche 1 bis 8, **dadurch gekennzeichnet,** daß die Heizeinrichtungen (1) individuell regelbar sind.

10. Reflowlötanlage nach einem der Ansprüche 1 bis 9, **dadurch gekennzeichnet,** daß die verschiedenen Zonen in einer Linie angeordnet sind.

11. Reflowlötanlage nach einem der Ansprüche 1 bis 9, **dadurch gekennzeichnet,** daß die verschiedenen Zonen über Eck angeordnet sind.

12. Reflowlötanlage nach einem der Ansprüche 1 bis 11, **dadurch gekennzeichnet,** daß die Förderrichtung im wesentlichen horizontal ist.

13. Reflowlötanlage nach einem der Ansprüche 1 bis 11, **dadurch gekennzeichnet,** daß die Förderrichtung zumindest über Teilstrecken im wesentlichen vertikal ist.
